# EUROPEAN PATENT APPLICATION

(11) **EP 4 435 918 A1**
(43) Date of publication of application: **25.09.2024**
(21) Application number: 24159669.1
(22) Date of filing: 26.02.2024
(51) Int. Cl.: H01M 10/056, H01M 4/38, H01M 10/052

(54) **COMPOSITE ELECTROLYTE MEMBRANE AND PREPARATION METHOD THEREOF AND LITHIUM-SULFUR BATTERY**

(30) Priority: 24.02.2023 CN 202310164971
(71) Applicant: Hon Hai Precision Industry Co., Ltd., New Taipei City (TW); SolidEdge Solution Inc., Hsinchu 300 (TW)
(72) Inventor: CHANG, Chih-Ching, 300 Hsinchu (TW); LAI, Hong-Zheng, 300 Hsinchu (TW); CHANG, Tseng-Lung, 300 Hsinchu (TW)
(74) Representative: Zaboliene, Reda

(57) **Abstract**

A composite electrolyte membrane, comprises: a lithium salt compound, a polymer material, a solid electrolyte, and a plasticizer. The polymer material comprises polyvinylidene fluoride and polymethyl methacrylate. The present disclosure further discloses a lithium-sulfur battery using the composite electrolyte membrane. A method for preparing the composite electrolyte membrane is further provided.

## Description

### CROSS-REFERENCE TO RELATED APPLICATIONS

This application claims all benefits from the Chinese Patent Application No.202310164971.9, filed on February 24, 2023, in the China National Intellectual Property Administration, the disclosure of which is incorporated herein by reference.

### FIELD

The present disclosure relates to a battery technology, and particular to a composite electrolyte membrane, a preparation method thereof and a lithium-sulfur battery.

### BACKGROUND

Lithium-sulfur battery is a lithium battery with sulfur element as the positive electrode and metallic lithium as the negative electrode. Lithium-sulfur batteries using sulfur as the cathode active material have a high electric capacity (1675 mAh/g) and a high energy density (2600 Wh/kg), making them the energy storage devices with good development prospects.

During the charge and discharge process of lithium-sulfur batteries, complex electrochemical reactions will occur and various intermediates will be produced. These intermediates can be dissolved in the electrolyte and diffuse. If these intermediates diffuse and deposit on the separator or lithium metal surface, they will cause loss of the positive electrode active material and a passivation of the lithium metal surface.

### BRIEF DESCRIPTION OF THE DRAWINGS

In order to illustrate the technical solutions of the embodiments of the present application more clearly, the accompanying drawings in the embodiments will be briefly introduced below. It should be understood that the following drawings only show some embodiments of the present application, and therefore should not be seen as limiting the scope. For one of ordinary skill in the art, other related drawings can also be obtained from these drawings without any creative work.
FIG. 1 is a scanning electron microscope (SEM) image of a cross section of a composite electrolyte membrane provided by the present disclosure.
FIG. 2 is a structural diagram of a lithium-sulfur battery provided by the present disclosure.

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures, and components have not been described in detail so as not to obscure the related relevant feature being described. The drawings are not necessarily to scale, and the proportions of certain parts may be exaggerated better illustrate details and features. The description is not to be considered as limiting the scope of the embodiments described herein.

The term "outside" refers to a region that is beyond the outermost confines of a physical object. The term "inside" indicates that at least a portion of a region is partially contained within a boundary formed by the object. The term "substantially" is defined to essentially conforming to the particular dimension, shape or other word that substantially modifies, such that the component need not be exact. For example, substantially cylindrical means that the object resembles a cylinder, but can have one or more deviations from a true cylinder. The term "comprising" means "including, but not necessarily limited to"; it specifically indicates open-ended inclusion or membership in a so-described combination, group, series and the like. It should be noted that references to "an" or "one" embodiment in this disclosure are not necessarily to the same embodiment, and such references mean at least one.

The composite electrolyte membrane and its preparation method as well as the lithium-sulfur battery provided by the present disclosure will be further described in detail below with reference to the accompanying drawings and specific examples.

An embodiment of the present disclosure provides a composite electrolyte membrane. The composite electrolyte membrane comprises a lithium salt compound, a polymer material, a solid electrolyte, and a plasticizer. A weight ratio between the lithium salt compound, the polymer material, the solid electrolyte and the plasticizer is 20-25:30-40:20-30:15-20.

The lithium salt compound comprises at least one of lithium fluoride (LiF), lithium bisfluorosulfonimide (LiO₄NS₂F₂, referred to as LiFSI), lithium bistrifluoromethanesulfonimide (LiN(CF₃SO₂)₂, referred to as LiTFSI), Lithium bis(perfluoroethylsulfonimide) (Li(C₂F₅SO₂)₂N, referred to as LiBETI), and lithium dioxalatoborate (LiB(C₂O₄)₂), referred to as LiBOB). The lithium salt compound can belithium fluoride LiF, LiFSI, LiTFSI, LiBETI, LiBOB or combination thereof. It can be understood that, other lithium salt compounds used in conventional lithium ion batteries can also satisfy the present disclosure.

The polymer material comprises at least one of polyvinylidene fluoride (PVDF), (polyvinylidene fluoride-hexafluoropropylene) copolymer (PVDF-HFP), polyvinyl alcohol (PVA), polylactic acid (PLA), polyethylene glycol alcohol (PEG), polymethyl methacrylate (PMMA), propylene glycol methyl ether acetate (PMA) and polyacrylic acid (PAA). The polymer material can be PVDF, PVDF-HFP, PVA, PLA, PEG, PMMA, PMA,PAA or combination thereof.

The solid electrolyte can be at least one of lithium lanthanum zirconium oxide (LLZO), tantalum-doped lithium lanthanum zirconium oxide (LLZTO), and lithium aluminum titanium phosphate (LATP).

The plasticizer can be at least one of ethylene carbonate (EC), succinonitrile (succinonitrile), sulfolane (sulfolane), and tetraglyme (tetraglyme). A purpose of the plasticizer is to improve an ionic conductivity of the composite electrolyte membrane. The composite electrolyte membrane still maintains a solid appearance, and a form of the plasticizer does not affect the shape of the composite electrolyte membrane.

In the composite electrolyte membrane, the lithium salt compound is configured to increase a conductivity of lithium ions. The polymer material is configured to slow down diffusion of polysulfide. The solid electrolyte is configured to increase the conductivity of ions, slow down the diffusion of polysulfides, and avoid direct puncture by lithium dendrites. The plasticizer is configured to improve the transmission efficiency of ions.

In one embodiment, the composite electrolyte membrane consists of the lithium salt compound, the polymer material, the solid electrolyte and the plasticizer. The weight ratio between the lithium salt compound, the polymer material, the solid electrolyte and the plasticizer can be 20-25:30-40:20-30:15-20.

In another embodiment, the polymer material of the composite electrolyte membrane is a mixture of PVDF and PMMA, the solid electrolyte is LLZO, the plasticizer is Tetraethylene glycol dimethyl ether (TEGDME or tetraglyme), and the lithium salt compound is LiTFSI. The weight ratio between the lithium salt compound, the polymer material, the solid electrolyte and the plasticizer is 23:36:23:18.

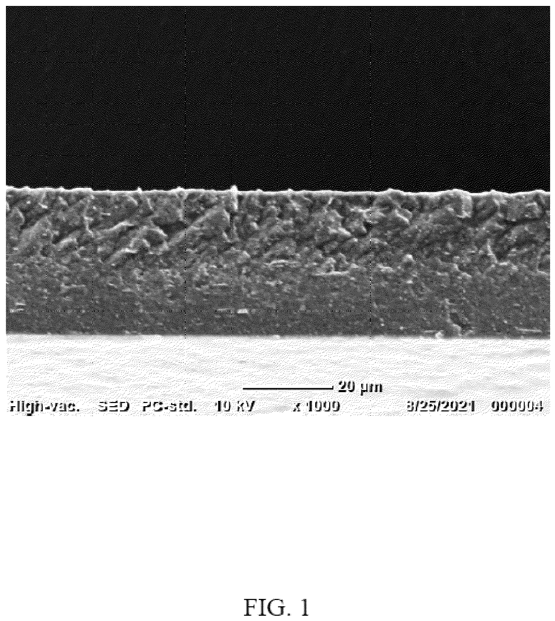

FIG. 1 is an SEM image of a cross section of the composite electrolyte membrane. As can be seen from FIG. 1, the composite electrolyte membrane is a continuous membrane without any holes. The polymer material of the composite electrolyte membrane is a mixture of PVDF and PMMA, the solid electrolyte is LLZO, the plasticizer is tetraglyme, and the lithium salt is LiTFSI. The weight ratio between them is 36 :23: 18:23.

The embodiment of the present disclosure further comprises a polysulfide diffusion experiment on the composite electrolyte membrane. Specifically, the composite electrolyte membrane was clamped using an H-type electrolytic cell (H-Cell), and a 1M Li₂S₄ solution dissolved in DME (1,2-Dimethoxyethane) was injected into the composite electrolyte membrane from one side of the composite electrolyte membrane. DME was injected into the composite electrolyte membrane from the other side of the composite electrolyte membrane to observe a rate of the polysulfides diffusion. Compared with the traditional separator sample (Celgard 2320), the diffusion rate of polysulfides is reduced by 100 to 1000 times, which indicates that the composite electrolyte membrane of the present disclosure can prevent the diffusion of polysulfides and avoid passivation of the lithium metal surface.

Another embodiment of the present disclosure further provides a method for preparing the composite electrolyte membrane, which comprises the following steps:
S1, mixing a lithium salt compound and a plasticizer and then stirring the lithium salt compound and the plasticizer to obtain a first composite;
S2, adding a polymer material to the first composite and stirring the polymer material and the first composite to obtain a second composite;
S3, adding the solid electrolyte to the second composite and stirring the solid electrolyte and the second composite to obtain a third composite; and
S4: applying the third composite on a substrate surface and dry it to obtain a composite electrolyte membrane.

In steps S1, S2 and S3, the mixing order of the lithium salt compound, polymer material, solid electrolyte and plasticizer is not limited. A weight ratio between the lithium salt compound, the polymer material, the solid electrolyte and the plasticizer is 20-25:30-40:20-30:15-20.

In step S4, during the drying process, the liquid plasticizer does not affect the appearance of the composite electrolyte membrane, and the appearance of the composite electrolyte membrane is solid.

In step S4, a material of the substrate is not limited and can be polytetrafluoroethylene or the like. A method of applying the third composite on the substrate surface is not limited, can be coating, spraying, pouring, or etc. The drying method is not limited, such as vacuum heating, baking, etc.

In one embodiment, the third composite is coated on a polytetrafluoroethylene substrate surface, and then is removed after baking to form a solid composite electrolyte membrane.

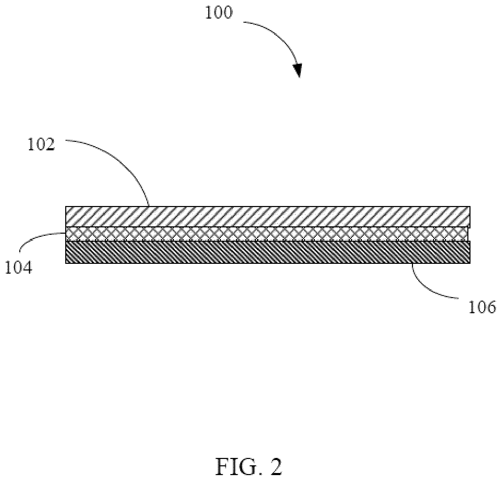

Referring to FIG. 2, yet another embodiment of the present disclosure provides a lithium-sulfur battery100. The lithium-sulfur battery 100comprises a positive electrode plate 102, a negative electrode plate 106 and the composite electrolyte membrane 104 discussed above. The positive electrode plate 102, the composite electrolyte membrane 104 and the negative electrode plate106 are stacked in sequence, that is, the composite electrolyte membrane 104 is located between the positive electrode plate 102 and the negative electrode plate 106. The negative electrode plate106 can be metallic lithium. The positive electrode plate 102comprises sulfur, a binder, and a conductive agent. The binder can be a polymer, such as polyvinylidene fluoride (PVDF) or polytetrafluoroethylene (PTFE). The conductive agent can be carbon black, acetylene black, carbon nanotubes or graphene, etc.

The preparation process of the lithium-sulfur battery can be as follows: putting the positive electrode plate into a positive electrode shell of the button battery and dripping an electrolyte, then placing the composite electrolyte membrane on the positive electrode plate and dripping the electrolyte again, and then placing the negative electrode plate on the composite electrolyte membrane to a button lithium-sulfur battery.

The composite electrolyte membrane and its preparation method and the lithium-sulfur battery have the following advantages: first, the composite electrolyte membrane has no holes and can effectively avoid polysulfide diffusion, thereby avoiding passivation of the lithium metal surface; second, the preparation method of the composite electrolyte membrane described above has a simple process and can realize industrial large-scale production.

The embodiments shown and described above are only examples. Even though numerous characteristics and advantages of the present technology have been set forth in the foregoing description, together with details of the structure and function of the present disclosure, the disclosure is illustrative only, and changes may be made in the detail, including in matters of shape, size, and arrangement of the parts within the principles of the present disclosure, up to and including the full extent established by the broad general meaning of the terms used in the claims.

Depending on the embodiment, certain of the steps of methods described may be removed, others may be added, and the sequence of steps may be altered. The description and the claims drawn to a method may comprise some indication in reference to certain steps. However, the indication used is only to be viewed for identification purposes and not as a suggestion for ordering the steps.

## Claims

**1.** A composite electrolyte membrane, comprising:
a lithium salt compound, a polymer material, a solid electrolyte, and a plasticizer, wherein the polymer material comprises polyvinylidene fluoride and polymethyl methacrylate.

**2.** The composite electrolyte membrane of claim 1, wherein a weight ratio between the lithium salt compound, the polymer material, the solid electrolyte, and the plasticizer is 20-25:30-40 :20-30:15-20.

**3.** The composite electrolyte membrane of claim 1, wherein the lithium salt compound comprises at least one of lithium fluoride, lithium bisfluorosulfonimide, lithium bistrifluoromethanesulfonimide, bis(perfluoroethyl) lithium sulfonylimide), and lithium dioxaloborate.

**4.** The composite electrolyte membrane of claim 1, wherein the polymer material comprises at least one of polyvinylidene fluoride, (polyvinylidene fluoride-hexafluoropropylene) copolymer, polyvinyl alcohol, polylactic acid, polyvinylidene fluoride, Ethylene glycol, polymethyl methacrylate, propylene glycol methyl ether acetate, and polyacrylic acid.

**5.** The composite electrolyte membrane of claim 1, wherein the solid electrolyte comprises at least one of lithium lanthanum zirconium oxide, tantalum-doped lithium lanthanum zirconium oxide, and lithium titanium aluminum phosphate.

**6.** The composite electrolyte membrane of claim 1, wherein the plasticizer comprises at least one of ethylene carbonate, succinonitrile, sulfolane, and tetraglyme.

**8.** The composite electrolyte membrane of claim 1, wherein the composite electrolyte membrane consists of the lithium salt compound, the polymer material, the solid electrolyte, and the plasticizer.

**9.** The composite electrolyte membrane of any one of claims 1 to 8, wherein the polymer material is a mixture of PVDF and PMMA, the solid electrolyte is LLZO, the plasticizer is tetraglyme, and the lithium salt compound is LiTFSI.

**10.** The composite electrolyte membrane of claim 9, wherein a weight ratio between the lithium salt compound, the polymer material, the solid electrolyte, and the plasticizer is 23:36:23: 18.

**11.** A lithium-sulfur battery, comprising:
a composite electrolyte membrane, a positive electrode plate, and a negative electrode plate stacked with each other, wherein the composite electrolyte membrane is located between the positive electrode plate and the negative electrode plate, the composite electrolyte membrane comprises a lithium salt compound, a polymer material, a solid electrolyte and a plasticizer, the polymer material comprises polyvinylidene fluoride and polymethyl methacrylate.

**12.** The lithium-sulfur battery of claim 11, wherein the composite electrolyte membrane consists of the lithium salt compound, the polymer material, the solid electrolyte, and the plasticizer.

**13.** The lithium-sulfur battery of any one of claims 11 to 12, wherein the polymer material is a mixture of PVDF and PMMA, the solid electrolyte is LLZO, the plasticizer is tetraglyme, and the lithium salt compound is LiTFSI.

**14.** The lithium-sulfur battery of claim 13, a weight ratio between the lithium salt compound, the polymer material, the solid electrolyte, and the plasticizer of the composite electrolyte membrane is 20-25:30-40 :20-30:15-20.

**15.** A method for preparing a composite electrolyte membrane, comprising steps of:
Mixing a lithium salt compound and a plasticizer and then stirring the lithium salt compound and the plasticizer to obtain a first composite;
adding a polymer material to the first composite and stirring the polymer material and the first composite evenly to obtain a second composite;
adding the solid electrolyte to the second composite and stirring the solid electrolyte and the second composite evenly to obtain a third composite; and
applying the third composite on a substrate surface and dry it to obtain the composite electrolyte membrane as any one of claims 1 to 10.
